# EUROPÄISCHE PATENTSCHRIFT

(11) **EP 2 506 992 B1**
(45) Veröffentlichungstag und Bekanntmachung des Hinweises auf die Patenterteilung: **16.07.2014**
(21) Anmeldenummer: 10798524.4
(22) Anmeldetag: 18.11.2010
(51) Int. Cl.: B21B 27/10, B21B 45/02

(54) **VERFAHREN ZUM WALZEN EINES WALZGUTS**
METHOD FOR ROLLING A PRODUCT WHICH IS TO BE ROLLED
PROCÉDÉ POUR LAMINER UNE MATIÈRE À LAMINER

(30) Priorität: 01.12.2009 DE 102009056264
(43) Veröffentlichungstag der Anmeldung: 10.10.2012
(73) Patentinhaber: SMS Siemag AG, 40237 Düsseldorf (DE)
(72) Erfinder: PAWELSKI, Hartmut, 40883 Ratingen (DE); MATHWEIS, Dietrich, 40479 Düsseldorf (DE)
(74) Vertreter: Klüppel, Walter
(86) Internationale Anmeldenummer: PCT/EP2010/067724
(87) Internationale Veröffentlichungsnummer: WO 2011/067119

(56) Entgegenhaltungen:
- WO-A1-88/09230
- JP-A- 9 122 733
- JP-A- 54 067 545
- JP-A- 61 078 509

## Beschreibung

Die Erfindung betrifft ein Verfahren zum Walzen eines Walzguts in einem Walzgerüst oder in mehreren Walzgerüsten, wobei an dem Walzgerüst oder an den Walzgerüsten ein Aufsprühen eines Kühlschmierstoffs auf das Walzgut und/oder auf die Walzen des Walzgerüsts erfolgt, wobei der durch den Walzvorgang erwärmte Kühlschmierstoff an einem in Walzrichtung hinter den Walzen liegenden Ort oder in dem in Walzrichtung nachfolgenden Walzgerüst aufgefangen, zu einem in Walzrichtung vor den Walzen liegenden Ort oder zum in Walzrichtung vorgelagerten Walzgerüst geleitet und dort zumindest teilweise zum Aufsprühen auf das Walzgut und/oder auf die Walzen eingesetzt wird.

Ein Verfahren dieser Art ist im Stand der Technik hinlänglich beschrieben. Bekannt geworden ist es auch, in einzelnen Walzgerüsten das zum Einsatz kommende Kühlschmiermittel zu temperieren bzw. aufzubereiten, um günstige Walzbedingungen zu erhalten. Hierzu wird auf die JP 9 122733 A hingewiesen; ähnliche Lösungen zeigen die JP 61 078509 A, die WO 88/09230 A1 und die JP 54 067545 A.

Beispiele für die verschiedenen Möglichkeiten der Bereitstellung bzw. der Aufbereitung von Kühlschmierstoff sowie generell der Versorgung mit Kühlschmierstoff sind in der JP 2007 237230 A, in der EP 1 829 623 A1, in der JP 2000 094026 A, in der WO 98/51423, in der EP 1 423 214 B1, in der EP 1 829 625 A1, in der DE 600 30 288 T2, in der JP 5919 9109 A, in der JP 0815 5510 A, in der JP 2000 351002 A und in der JP 2007 253178 A beschrieben.

Demnach werden ggf. mehrere Kreise für Kühlschmierstoff für verschiedene Walzgerüste vorgesehen, wobei die Vorlauftemperatur geregelt werden kann. In Walzgerüsten, die in Walzrichtung relativ weit am Ende angeordnet sind, kann dabei Kühlschmierstoff mit geringerer Ölkonzentration eingesetzt werden, um eine verbesserte Bandsauberkeit und eine bessere Rauheitsübertragung zu erreichen.

Mit einer Vorlauftemperatur zu arbeiten, die über alle Gerüste konstant ist, stellt einen Kompromiss dar. Die sich daraus ergebende Temperaturführung ist nicht optimal.

Auch Kaltwalzanlagen haben üblicherweise ein oder maximal zwei geschlossene Kühlschmierstoffsysteme, bei denen der Kühlschmierstoff in den Gerüstwannen aufgefangen, in einen Tank gepumpt, filtriert, konditioniert und temperiert wird und über einen gemeinsamen Vorlauf den Sprühbalken für die Band- und Werkzeugkühlung wieder zugeführt wird. Dabei soll ein Medium (Kühlschmierstoff) mit gleichem Zustand im Vorlauf (betreffend Temperatur, Tröpfchengröße, Verschmutzungszustand u. ä.) sowohl für die Schmierung im Walzspalt als auch für die Kühlung und Reinigung von Band und Walzen sorgen. Die gleichzeitige Erfüllung dieser verschiedenen Aufgaben kann somit systembedingt auch hier nur einen Kompromiss darstellen.

Eine negative Auswirkung dieses Kompromisses ist es, dass das Temperaturniveau beim ersten (evtl. auch beim zweiten) Stich in der Regel zu niedrig ist, während die Produktivität der Anlage in den späteren Stichen meist aufgrund zu hoher Temperaturen beschränkt ist.

Der vorliegenden Erfindung liegt die Aufgabe zugrunde, diesbezüglich Abhilfe zu schaffen und in zumindest einem Walzgerüst bzw. einem Teil der Walzgerüste, vorzugsweise in allen Walzgerüsten, eine verbesserte Schmierung zu erreichen, wobei insbesondere eine geringere Umformfestigkeit im ersten (ggf. auch im zweiten) Gerüst bzw. Stich erreicht werden soll. Damit soll der Kraft- und Arbeitsaufwand reduziert und so eine Energieeinsparung erzielt werden, das Walzen soll also energiesparender möglich sein. Die Produktivität des Walzprozesses soll somit gesteigert werden.

Die Lösung dieser Aufgabe durch die Erfindung ist dadurch gekennzeichnet, dass mit Blick auf das Walzen in einem Walzgerüst der durch den Walzvorgang erwärmte Kühlschmierstoff von einem hinter den Walzen liegenden Ort in einem vor den Walzen liegenden Ort verwendet wird, um ausschließlich oder zusätzlich einen ausgewählten Bereich in Richtung quer zur Walzrichtung des Walzguts und/oder der Walzen zu besprühen, wobei das ausschließliche oder zusätzliche Besprühen der Randbereiche des Walzguts und/oder der Walzen erfolgt (sog. Hot Edge Spray).

Die Temperatur des an dem vor den Walzen liegenden Ort eingesetzten erwärmten Kühlschmierstoffs kann dabei auf einen vorgegebenen Wert gesteuert oder geregelt werden. Die Temperatur des Kühlschmierstoffs kann dabei durch Mischung des erwärmten Kühlschmierstoffs von dem hinter den Walzen liegenden Ort mit an dem vor den Walzen eingesetzten kälteren Kühlschmierstoff gesteuert oder geregelt werden. Auch ist es möglich, dass der Volumenstrom des eingesetzten erwärmten Kühlschmierstoffs auf einen vorgegebenen Wert gesteuert oder geregelt wird.

Eine analoge Lösung der genannten Aufgabe zeichnet sich im Falle des Einsatzes von mindestens zwei Walzgerüsten dadurch aus, dass der durch den Walzvorgang erwärmte Kühlschmierstoff von einem in Walzrichtung nachfolgenden Walzgerüst in einem in Walzrichtung vorgelagerten Walzgerüst verwendet wird, um ausschließlich oder zusätzlich einen ausgewählten Bereich in Richtung quer zur Walzrichtung des Walzguts und/oder der Walzen zu besprühen, wobei das ausschließliche oder zusätzliche Besprühen der Randbereiche des Walzguts und/oder der Walzen erfolgt.

Bevorzugt werden dabei mehr als zwei Walzgerüste in Walzrichtung aufeinander folgend angeordnet, wobei der durch den Walzvorgang erwärmte Kühlschmierstoff in einem in Walzrichtung nachfolgenden Walzgerüst aufgefangen, zu einem in Walzrichtung vorgelagerten Walzgerüst geleitet und dort zumindest teilweise zum Aufsprühen auf das Walzgut und/oder auf die Walzen eingesetzt wird.

Die Temperatur des in dem in Walzrichtung vorgelagerten Walzgerüst eingesetzten erwärmten Kühlschmierstoffs kann dabei auf einen vorgegebenen Wert gesteuert oder geregelt werden. Die Temperatur des Kühlschmierstoffs kann dabei durch Mischung des erwärmten Kühlschmierstoffs aus dem in Walzrichtung nachfolgenden Walzgerüst mit dem in Walzrichtung vorgelagerten Walzgerüst eingesetzten kälteren Kühlschmierstoff gesteuert oder geregelt werden.

Ferner kann der Volumenstrom des in dem in Walzrichtung vorgelagerten Walzgerüst eingesetzten erwärmten Kühlschmierstoffs auf einen vorgegebenen Wert gesteuert oder geregelt werden.

Die Vorgabe von Soll-Temperaturen und/oder von Volumenströmen des Kühlschmierstoffs in zumindest einem Walzgerüst erfolgt vorzugsweise durch ein Prozessmodell. Dem Prozessmodell kann dabei mindestens eine gemessene Walzkraft in einem der Walzgerüste, mindestens ein gemessener Motorstrom eines elektrischen Antriebs einer Walze, mindestens ein gemessenes Motordrehmoment eines elektrischen Antriebs einer Walze oder mindestens eine an einer Stelle gemessene Temperatur des Walzguts vorgegeben werden.

Bei dem in Rede stehenden Walzvorgang handelt es sich vorzugsweise um ein Kaltwalzen.

Zur Erzielung eines guten Wärmeübergangs kann vorgesehen werden, dass der Kühlschmierstoff auf das Walzgut unter einem Winkel gegen die Walzrichtung aufgesprüht wird, vorzugsweise unter einem Winkel kleiner als 45° zur Horizontalen.

Als Kühlschmierstoff wird vorzugsweise Öl oder Emulsion verwendet.

Die Grundidee der vorliegenden Erfindung besteht also darin, die hohe Abwärme, die aufgrund der Umformarbeit in den hinteren Stichen bzw. Gerüsten entsteht, zu nutzen, um das Walzgut, insbesondere das Band, und die Walzen im ersten (ggf. auch im zweiten) Stich bzw. Gerüst vorzuwärmen. Dazu soll zumindest ein Teil des besonders stark erwärmten Kühlschmierstoffs aufgefangen und in den vorderen Stichen bzw. Gerüsten wieder aufgebracht werden.

Das Erfindungskonzept kann dabei aber auch - wie oben erläutert - an einem einzigen Walzgerüst genutzt werden.

Die Erfindung schlägt also die Nutzung des aufgrund der naturgemäß entstehenden Prozesswärme aufgeheizten Kühlschmierstoffs zur gezielten Beeinflussung von Wärme- und Volumenströmen vor.

Der Einsatz eines Prozessmodells zur Vorsteuerung von Mengen, Mischungsverhältnissen und Temperaturen verbessert das vorgeschlagene Verfahren wesentlich. Die Regelung der genannten Größen durch prozessmodellgestützte Auswertung gemessener Prozessdaten (wie insbesondere Walzkräfte, Motorströme, Motordrehmomente und die Bandtemperatur) verbessert den Prozess weiterhin.

Der Einsatz des rückgeführten heißen Kühlschmiermittels als sog. "Hot Edge Spray" oder zur anderweitigen Planheitsbeeinflussung durch thermische Veränderung der Walzenkontur bietet eine interessante Erweiterung der Funktionalität des vorgeschlagenen Verfahrens.

Demgemäß kann die Produktivität des Walzverfahrens erhöht werden. Weiterhin können gleichmäßigere Prozessbedingungen erreicht werden.

Es ergibt sich ferner eine Energieeinsparung, vor allem im ersten Gerüst bzw. beim ersten Stich.

Insgesamt lässt sich daher betreffend die Vorteile des vorgeschlagenen Verfahrens folgendes feststellen:

Es ergibt sich eine verbesserte Schmierung und eine geringere Umformfestigkeit im ersten (ggf. auch im zweiten) Gerüst bzw. Stich, damit ergibt sich ein geringerer Kraft- und Arbeitsbedarf und somit eine Energieeinsparung.

Weiterhin wird eine höhere Produktivität erzielt, d. h. es kommt zu einer höheren Abnahme im ersten Stich, zu einer höheren Walzgeschwindigkeit und/oder zu einer Abnahme in den weiteren Stichen aufgrund einer effektiveren Kühleinrichtung.

Der Volumenfluss ist im konventionellen Medienkreislauf geringer.

Weiterhin liegt eine gleichmäßigere Temperaturverteilung beim Rücklauf des Kühlschmierstoffs vor, dadurch ergibt sich eine gleichmäßigere Konditionierung des Kühlschmierstoffs, z. B. eine geringere Gefahr des Bakterienwachstums bei Emulsionen.

Die Temperatur des aufgebrachten Mediums im ersten (ggf. auch im zweiten) Gerüst bzw. Stich kann durch Mischung von Kühlschmiermittel aus dem Vorlauf und dem rückgeführten heißeren Kühlschmiermittel in gewissen Grenzen gezielt eingestellt, d. h. gesteuert bzw. geregelt, werden. Vorteilhaft kann dies durch ein geeignetes Prozessmodell vorgegeben bzw. geregelt werden, wobei das Prozessmodell auf gemessene Prozessparameter und den Anlagenzustand (z. B. Warmfahrphase) zurückgreift.

In der Zeichnung ist ein Ausführungsbeispiel der Erfindung dargestellt. Es zeigen:
- Fig. 1: schematisch eine Kaltwalzstraße in der Seitenansicht, in der ein Walzgut in Form eines Bandes gewalzt wird, und
- Fig. 2: einen Kühlbalken, der über Düsen Kühlschmierstoff auf die Oberfläche des Walzguts ausbringt.

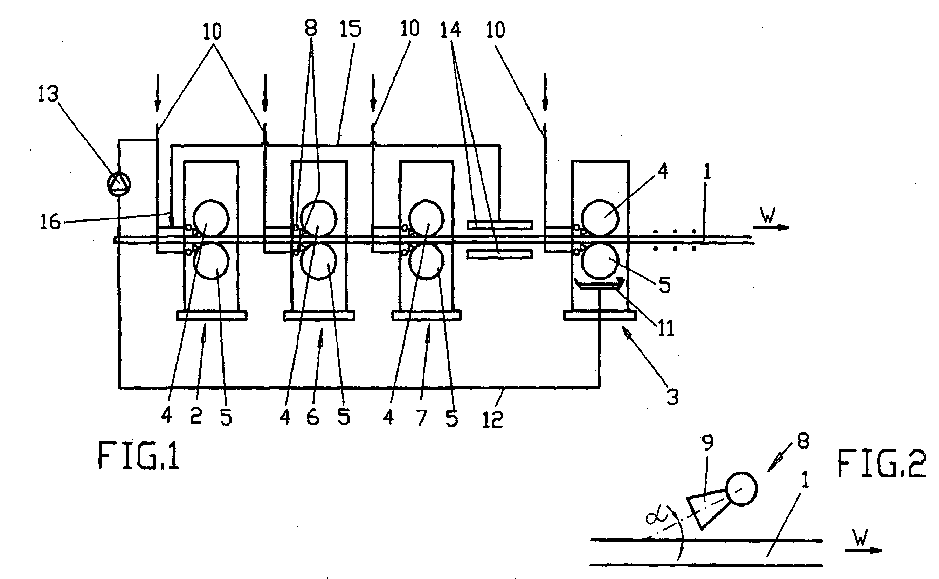

In Fig. 1 ist eine Walzstraße zu sehen, die eine Anzahl von Walzgerüsten 2, 3, 6 und 7 aufweist. In der Walzstraße wird ein Walzgut 1, vorliegend ein Band, gewalzt. Jedes Walzgerüst 2, 3, 6, 7 hat (mindestens) zwei zusammenwirkende Walzen 4, 5. Das in Walzrichtung W erste Walzgerüst 2 führt den ersten Stich aus. Das in Walzrichtung W letzte Walzgerüst ist das Walzgerüst 3; dazwischen sind weitere Walzgerüste 6, 7 angeordnet.

Über Zuleitungen 10 wird Kühlbalken 8, die die Ober- und Unterseite des Bandes 1 mit Kühlschmierstoff besprühen, der Kühlschmierstoff zugeleitet. Das aufgesprühte Kühlschmiermittel kann in einem unteren Bereich des Walzgerüsts von Auffangschalen 11 aufgefangen werden, wobei eine Auffangschale 11 nur für das Walzgerüst 3 skizziert ist.

Wesentlich ist, dass der durch den Walzvorgang erwärmte Kühlschmierstoff in einem in Walzrichtung W nachfolgenden Walzgerüst - vorliegend im Walzgerüst 3 - aufgefangen und zum in Walzrichtung W vorgelagerten Walzgerüst - vorliegend zum Walzgerüst 2 - geleitet wird. Dies erfolgt mittels einer Leitung 12 mit integrierter Pumpe 13. Im vorgelagerten Walzgerüst 2 wird das durch den Walzprozess erwärmte Kühlschmiermittel genutzt und dort zumindest teilweise zum Aufsprühen auf das Band 1 bzw. auf die Walzen 4, 5 des Walzgerüsts 2 eingesetzt.

Details hierzu sind in Fig. 2 zu sehen. Der Kühlbalken 8 hat im Ausführungsbeispiel Düsen 9, deren Spritzrichtung gegen die Walzrichtung W gerichtet ist und zur Horizontalen im übrigen einen Winkel α einschließt, der im Ausführungsbeispiel ca. 30° beträgt. Durch diese Gegenstrombandkühlung wird die sich ergebende Turbulenz für einen effizienten Wärmetausch genutzt.

Eine Senkung des Walzmomentes durch eine geeignete Vorwärmung wir durch Senkung der Umformfestigkeit des Bandes und/oder durch Senkung der Walzspaltreibung erreicht. Bei Emulsionen werden zusätzlich durch höhere Temperaturen eine verbesserte Ablagerung der Ölphase und somit stabilere Schmierbedingungen erzielt.

Die Vorwärmung erfordert im ersten Stich bzw. Gerüst eine deutlich erhöhte Vorlauftemperatur. Diese könnte zwar auch durch eine Heizung erzielt werden, energetisch vorteilhafter ist es aber, die anfallende Abwärme von den hinteren Stichen bzw. Gerüsten zu nutzen.

Um den Kühlschmierstoff dort auf eine hohe Temperatur zu bringen, sind effiziente Kühleinrichtungen, die mit relativ geringen Volumenströmen auskommen, besonders geeignet.

Eine bevorzugte Ausgestaltung einer solchen Bandkühleinrichtung, die auf dem Gegenstromprinzip mit Turbulenzerzeugung basiert, ist in Fig. 2 dargestellt. Das aus dieser Einrichtung austretende stark erhitzte Medium kann zum großen Teil aufgefangen und im ersten Stich bzw. Gerüst einlaufseitig wieder aufgebracht werden.

Eine Filtration muss - falls überhaupt - nur grob erfolgen, da die Ansprüche an die Sauberkeit des Kühlschmiermittels im ersten Sticht bzw. Gerüst am geringsten sind. Das Kühlschmiermittel gelangt danach über die Gerüstwanne wieder in den konventionellen Medienkreislauf.

Das vorgeschlagene Verfahren kann natürlich zwischen den skizzierten und ggf. auch zwischen weiteren Walzgerüsten genutzt werden, indem jedenfalls vorgewärmter Kühlschmierstoff von einem nachgelagerten Walzgerüst zu einem vorgelagerten Walzgerüst gefördert wird, um die Walzbedingungen am vorgelagerten Walzgerüst zu beeinflussen.

Wie erläutert ist es auch möglich, Kühlschmierstoff hinter den Walzen 4, 5 eines einzelnen Walzgerüsts abzuleiten und in den Bereich vor den Walzen rückzuführen, d. h. das vorgeschlagene Prinzip kann auch an einem Einzelgerüst genutzt werden.

Die maximale Umformleistung bzw. die Produktivität können somit erhöht werden. Es können optimale Schmierbedingungen gezielt eingestellt werden.

In Fig. 1 ist noch eine zusätzliche Möglichkeit skizziert, mit der ein Wärmetransfer aus dem Öl zwischen hinteren Walzgerüsten 3, 7 in den Bereich des ersten Walzgerüsts 2 geleitet werden kann. Hier ist zwischen den Gerüsten 7 und 3 ein Wärmetauscher 14 in Form eines Kühlelements (Bandkühlung) angeordnet.

Der Wärmetauscher 14 steht über eine Wärmeleitung 15 mit dem Bereich des vorderen Walzgerüsts 2 in Verbindung. Hier ist ein weiterer nur schematisch angedeuteter Wärmetauscher 16 angeordnet, mit dem Wärme in den Kühlmittelstrom eingeleitet werden kann, der hier auf die Walzen 4, 5 bzw. auf das Band 1 aufgebracht wird. Demgemäß wird hier nicht das Öl selber zu einem in Walzrichtung W vorgelagerten Walzgerüst geleitet, sondern nur seine Wärme.

### Bezugszeichenliste:

- 1: Walzgut
- 2: Walzgerüst
- 3: Walzgerüst
- 4: Walze
- 5: Walze
- 6: Walzgerüst
- 7: Walzgerüst
- 8: Kühlbalken
- 9: Düse
- 10: Zuleitung
- 11: Auffangschale
- 12: Leitung
- 13: Pumpe
- 14: Wärmetauscher (Kühlelement)
- 15: Wärmeleitung
- 16: Wärmetauscher

- W: Walzrichtung
- α: Winkel

## Patentansprüche

1. Verfahren zum Walzen eines Walzguts (1) in einem Walzgerüst (2), wobei an dem Walzgerüst (2) ein Aufsprühen eines Kühlschmierstoffs auf das Walzgut (1) und/oder auf die Walzen (4, 5) des Walzgerüsts (2) erfolgt, wobei der durch den Walzvorgang erwärmte Kühlschmierstoff an einem in Walzrichtung W hinter den Walzen (4, 5) liegenden Ort aufgefangen, zu einem in Walzrichtung W vor den Walzen (4, 5) liegenden Ort geleitet und dort zumindest teilweise zum Aufsprühen auf das Walzgut (1) und/oder auf die Walzen (4, 5) eingesetzt wird,
**dadurch gekennzeichnet, dass**
der durch den Walzvorgang erwärmte Kühlschmierstoff von einem hinter den Walzen (4, 5) liegenden Ort in einem vor den Walzen (4, 5) liegenden Ort verwendet wird, um ausschließlich oder zusätzlich einen ausgewählten Bereich in Richtung quer zur Walzrichtung W des Walzguts (1) und/oder der Walzen (4, 5) zu besprühen, wobei das ausschließliche oder zusätzliche Besprühen der Randbereiche des Walzguts (1) und/oder der Walzen (4, 5) erfolgt.

2. Verfahren nach Anspruch 1, **dadurch gekennzeichnet, dass** die Temperatur des an dem vor den Walzen (4, 5) liegenden Ort eingesetzten erwärmten Kühlschmierstoffs auf einen vorgegebenen Wert gesteuert oder geregelt wird.

3. Verfahren nach Anspruch 2, **dadurch gekennzeichnet, dass** die Temperatur des Kühlschmierstoffs durch Mischung des erwärmten Kühlschmierstoffs von dem hinter den Walzen (4, 5) liegenden Ort mit an dem vor den Walzen (4, 5) eingesetzten kälteren Kühlschmierstoff gesteuert oder geregelt wird.

4. Verfahren nach Anspruch 1 oder 2, **dadurch gekennzeichnet, dass** der Volumenstrom des eingesetzten erwärmten Kühlschmierstoffs auf einen vorgegebenen Wert gesteuert oder geregelt wird.

5. Verfahren zum Walzen eines Walzguts (1) in mindestens zwei in Walzrichtung W aufeinander folgenden Walzgerüsten (2, 3), wobei an den mindestens zwei Walzgerüsten (2, 3) ein Aufsprühen eines Kühlschmierstoffs auf das Walzgut (1) und/oder auf die Walzen (4, 5) der Walzgerüste (2, 3) erfolgt, wobei der durch den Walzvorgang erwärmte Kühlschmierstoff in dem in Walzrichtung W nachfolgenden Walzgerüst (3) aufgefangen, zum in Walzrichtung W vorgelagerten Walzgerüst (2) geleitet und dort zumindest teilweise zum Aufsprühen auf das Walzgut (1) und/oder auf die Walzen (4, 5) eingesetzt wird,
**dadurch gekennzeichnet, dass**
der durch den Walzvorgang erwärmte Kühlschmierstoff von einem in Walzrichtung W nachfolgenden Walzgerüst (3) in einem in Walzrichtung W vorgelagerten Walzgerüst (2) verwendet wird, um ausschließlich oder zusätzlich einen ausgewählten Bereich in Richtung quer zur Walzrichtung W des Walzguts (1) und/oder der Walzen (4, 5) zu besprühen, wobei das ausschließliche oder zusätzliche Besprühen der Randbereiche des Walzguts (1) und/oder der Walzen (4, 5) erfolgt.

6. Verfahren nach Anspruch 5, **dadurch gekennzeichnet, dass** mehr als zwei Walzgerüste (2, 3, 6, 7) in Walzrichtung W aufeinander folgend angeordnet sind, wobei der durch den Walzvorgang erwärmte Kühlschmierstoff in einem in Walzrichtung W nachfolgenden Walzgerüst (3) aufgefangen, zu einem in Walzrichtung W vorgelagerten Walzgerüst (2, 6, 7) geleitet und dort zumindest teilweise zum Aufsprühen auf das Walzgut (1) und/oder auf die Walzen (4, 5) eingesetzt wird.

7. Verfahren nach Anspruch 5 oder 6, **dadurch gekennzeichnet, dass** die Temperatur des in dem in Walzrichtung W vorgelagerten Walzgerüst (2) eingesetzten erwärmten Kühlschmierstoffs auf einen vorgegebenen Wert gesteuert oder geregelt wird.

8. Verfahren nach Anspruch 7, **dadurch gekennzeichnet, dass** die Temperatur des Kühlschmierstoffs durch Mischung des erwärmten Kühlschmierstoffs aus dem in Walzrichtung W nachfolgenden Walzgerüst (3) mit dem in Walzrichtung W vorgelagerten Walzgerüst (2) eingesetzten kälteren Kühlschmierstoff gesteuert oder geregelt wird.

9. Verfahren nach Anspruch 5 oder 6, **dadurch gekennzeichnet, dass** der Volumenstrom des in dem in Walzrichtung W vorgelagerten Walzgerüst (2) eingesetzten erwärmten Kühlschmierstoffs auf einen vorgegebenen Wert gesteuert oder geregelt wird.

10. Verfahren nach einem der Ansprüche 1 bis 9, **dadurch gekennzeichnet, dass** die Vorgabe von Soll-Temperaturen und/oder von Volumenströmen des Kühlschmierstoffs in zumindest einem Walzgerüst (2, 3, 6, 7) durch ein Prozessmodell erfolgt.

11. Verfahren nach Anspruch 10, **dadurch gekennzeichnet, dass** dem Prozessmodell mindestens eine gemessene Walzkraft in dem Walzgerüst (2) oder in einem der Walzgerüste (2, 3, 6, 7) vorgegeben wird.

12. Verfahren nach Anspruch 10, **dadurch gekennzeichnet, dass** dem Prozessmodell mindestens ein gemessener Motorstrom eines elektrischen Antriebs einer Walze (4, 5) vorgegeben wird.

13. Verfahren nach Anspruch 10, **dadurch gekennzeichnet, dass** dem Prozessmodell mindestens ein gemessenes Motordrehmoment eines elektrischen Antriebs einer Walze (4, 5) vorgegeben wird.

14. Verfahren nach Anspruch 10, **dadurch gekennzeichnet, dass** dem Prozessmodell mindestens eine an einer Stelle gemessene Temperatur des Walzguts (1) vorgegeben wird.

15. Verfahren nach einem der Ansprüche 1 bis 14, **dadurch gekennzeichnet, dass** das Walzen des Walzguts (1) ein Kaltwalzen ist.

16. Verfahren nach einem der Ansprüche 1 bis 15, **dadurch gekennzeichnet, dass** der Kühlschmierstoff auf das Walzgut (1) unter einem Winkel α gegen die Walzrichtung W aufgesprüht wird, vorzugsweise unter einem Winkel α kleiner als 45° zur Horizontalen.

17. Verfahren nach einem der Ansprüche 1 bis 16, **dadurch gekennzeichnet, dass** als Kühlschmierstoff Öl oder Emulsion verwendet wird.

## Claims

1. Method for the rolling of rolling stock (1) in a roll stand (2), wherein spraying of a cooling lubricant onto the rolling stock (1) and/or onto the rolls (4, 5) of the roll stand (2) is carried out at the roll stand (2), wherein the cooling lubricant heated by the rolling process is collected at a location lying behind the rolls (4, 5) in rolling direction W, conducted to a location lying in front of the rolls (4, 5) in rolling direction W and used there at least in part for spraying onto the rolling stock (1) and/or onto the rolls (4, 5), **characterised in that** the cooling lubricant heated by the rolling process from a location lying behind the rolls (4, 5) is used in a location lying in front of the rolls (4, 5) in order to exclusively or additionally spray a selected region in a direction transverse to the rolling direction W of the rolling stock (1) and/or the rolls (4, 5), wherein the exclusive or additional spraying of the edge regions of the rolling stock (1) and/or of the rolls (4, 5) is carried out.

2. Method according to claim 1, **characterised in that** the temperature of the heated cooling lubricant used at the location lying in front of the rolls (4, 5) is controlled or regulated to a predetermined value.

3. Method according to claim 2, **characterised in that** the temperature of the cooling lubricant is controlled or regulated by mixing the heated cooling lubricant from the location, which lies behind the rolls (4, 5), with colder cooling lubricant used in front of the rolls (4, 5).

4. Method according to claim 1 or 2, **characterised in that** the volume flow of the heated cooling lubricant used is controlled or regulated to a predetermined value.

5. Method of rolling a rolling stock (1) in at least two roll stands (2, 3) following one another in rolling direction W, wherein spraying of a cooling lubricant onto the rolling stock (1) and/or onto the rolls (4, 5) of the roll stands (2, 3) is carried out at the at least two roll stands (2, 3), wherein the cooling lubricant heated by the rolling process is collected in the roll stand (3) following in rolling direction W, conducted to the roll stand (2) upstream in rolling direction W and used there at least in part for spraying onto the rolling stock (1) and/or onto the rolls (4, 5), **characterised in that** the cooling lubricant heated by the rolling process from a roll stand (3) downstream in rolling direction (W) is used in a roll stand (2) upstream in rolling direction in order to exclusively or additionally spray a selected region in a direction transverse to the rolling direction W of the rolling stock (1) and/or the rolls (4, 5), wherein the exclusive or additional spraying of the edge regions of the rolling stock (1) and/or the rolls (4, 5) is carried out.

6. Method according to claim 5, **characterised in that** more than two roll stands (2, 3, 6, 7) are arranged in succession in rolling direction W, wherein the cooling lubricant heated by the rolling process is collected in a roll stand (3) downstream in rolling direction W, conducted to a roll stand (2, 6, 7) upstream in rolling direction W and used there at least in part for spraying onto the rolling stock (1) and/or onto the rolls (4, 5).

7. Method according to claim 5 or 6, **characterised in that** the temperature of the heated cooling lubricant used in the roll stand (2) upstream in rolling direction W is controlled or regulated to a predetermined value.

8. Method according to claim 7, **characterised in that** the temperature of the cooling lubricant is controlled or regulated by mixing the heated cooling lubricant from the roll stand (3) downstream in rolling direction W with the colder cooling lubricant used in the roll stand (2) upstream in rolling direction.

9. Method according to claim 5 or 6, **characterised in that** the volume flow of the heated cooling lubricant used in the roll stand (2) upstream in rolling direction W is controlled or regulated to a predetermined value.

10. Method according to any one of claims 1 to 9, **characterised in that** the presetting of target temperatures and/or of volume flows of the cooling lubricant is carried out in at least one roll stand (2, 3, 6, 7) by a process model.

11. Method according to claim 10, **characterised in that** at least one measured rolling force in the roll stand (2) or in one of the roll stands (2, 3, 6, 7) is predetermined for the process model.

12. Method according to claim 10, **characterised in that** at least one measured motor current of an electrical drive of a roll (4, 5) is predetermined for the process model.

13. Method according to claim 10, **characterised in that** at least one measured motor torque of an electric drive of a roll (4, 5) is predetermined for the process model.

14. Method according to claim 10, **characterised in that** at least one temperature of the rolling stock (1) measured at a location is predetermined for the process model.

15. Method according to any one of claims 1 to 14, **characterised in that** the rolling of the rolling stock (1) is cold rolling.

16. Method according to any one of claims 1 to 15, **characterised in that** the cooling lubricant is sprayed onto the rolling stock (1) at an angle α against the rolling direction W, preferably at an angle α less than 45° with respect to the horizontal.

17. Method according to any one of claims 1 to 16, **characterised in that** oil or emulsion is used as cooling lubricant.

## Revendications

1. Procédé pour le laminage d'un produit à laminer (1) dans une cage de laminoir (2), dans lequel on procède, contre la cage de laminoir (2), à une pulvérisation d'un lubrifiant de refroidissement sur le produit à laminer (1) et/ou sur les cylindres (4, 5) de la cage de laminoir (2), dans lequel le lubrifiant de refroidissement réchauffé par le processus de laminage est récupéré à un endroit situé derrière les cylindres (4, 5) dans la direction de laminage W, est guidé en direction d'un endroit situé devant les cylindres (4, 5) dans la direction de laminage W et y est mis en oeuvre au moins en partie pour la pulvérisation sur le produit à laminer (1) et/ou sur les cylindres (4, 5),
**caractérisé en ce**
**qu'**on utilise le lubrifiant de refroidissement réchauffé par le processus de laminage d'un endroit situé derrière les cylindres (4, 5) à un endroit situé devant les cylindres (4, 5) pour pulvériser à titre exclusif ou à titre supplémentaire une zone sélectionnée en direction transversale par rapport à la direction de laminage W du produit à laminer (1) et/ou des cylindres (4, 5), dans lequel on procède à la pulvérisation exclusive ou supplémentaire des zones marginales du produit à laminer (1) et/ou des cylindres (4, 5).

2. Procédé selon la revendication 1, **caractérisé en ce qu'**on commande ou on règle à une valeur prédéfinie la température du lubrifiant de refroidissement réchauffé, mis en oeuvre à l'endroit situé avant les cylindres (4, 5).

3. Procédé selon la revendication 2, **caractérisé en ce qu'**on commande ou on règle la température du lubrifiant de refroidissement par mélange du lubrifiant de refroidissement réchauffé provenant de l'endroit situé derrière les cylindres (4, 5) avec le lubrifiant de refroidissement plus froid mis en oeuvre devant les cylindres (4, 5).

4. Procédé selon la revendication 1 ou 2, **caractérisé en ce qu'**on commande ou on règle à une valeur prédéfinie le courant volumique du lubrifiant de refroidissement réchauffé mis en oeuvre.

5. Procédé pour le laminage d'un produit à laminer (1) dans au moins deux cages de laminage (2, 3) qui se succèdent dans la direction de laminage W, dans lequel on procède, contre lesdites au moins deux cages de laminoir (2, 3), à une pulvérisation d'un lubrifiant de refroidissement sur le produit à laminer (1) et/ou sur les cylindres (4, 5) des cages de laminoir (2, 3), dans lequel le lubrifiant de refroidissement réchauffé par le processus de laminage est récupéré dans la cage de laminoir (3) qui suit dans la direction de laminage W, est guidé en direction de la cage de laminoir (2) montée en amont dans la direction de laminage W et y est mis en oeuvre au moins en partie pour la pulvérisation sur le produit à laminer (1) et/ou sur les cylindres (4, 5),
**caractérisé en ce**
**qu'**on utilise le lubrifiant de refroidissement réchauffé par le processus de laminage d'une cage de laminoir (3) qui suit dans la direction de laminage W dans une cage de laminoir (2) montée en amont dans la direction de laminage W pour pulvériser à titre exclusif ou à titre supplémentaire une zone sélectionnée en direction transversale par rapport à la direction de laminage W du produit à laminer (1) et/ou des cylindres (4, 5), dans lequel on procède à la pulvérisation exclusive ou supplémentaire des zones marginales du produit à laminer (1) et/ou des cylindres (4, 5).

6. Procédé selon la revendication 5, **caractérisé en ce qu'**on dispose plus de deux cages de laminage (2, 3, 6, 7) qui se suivent l'une de l'autre dans la direction de laminage W, dans lequel le lubrifiant de refroidissement réchauffé par le processus de laminage est récupéré dans une cage de laminoir (3) qui suit dans la direction de laminage W, est guidé en direction d'une cage de laminoir (2, 6, 7) montée en amont dans la direction de laminage W et y est mis en oeuvre au moins en partie pour la pulvérisation sur le produit à laminer (1) et/ou sur les cylindres (4, 5).

7. Procédé selon la revendication 5 ou 6, **caractérisé en ce qu'**on commande ou on règle à une valeur prédéfinie la température du lubrifiant de refroidissement réchauffé, mis en oeuvre dans la cage de laminoir (2) montée en amont dans la direction de laminage W.

8. Procédé selon la revendication 7, **caractérisé en ce qu'**on commande ou on règle la température du lubrifiant de refroidissement par mélange du lubrifiant de refroidissement provenant de la cage de laminoir (3) qui suit dans la direction de laminage W avec le lubrifiant de refroidissement plus froid mis en oeuvre dans la cage de laminoir (2) montée en amont dans la direction de laminage W.

9. Procédé selon la revendication 5 ou 6, **caractérisé en ce qu'**on commande ou on règle à une valeur prédéfinie le courant volumique du lubrifiant de refroidissement réchauffé mis en oeuvre dans la cage de laminoir (2) montée en amont dans la direction de laminage W.

10. Procédé selon l'une quelconque des revendications 1 à 9, **caractérisé en ce que** la définition préalable des températures de consigne et/ou des courants volumiques du lubrifiant de refroidissement a lieu dans au moins une cage de laminoir (2, 3, 6, 7) via un modèle de processus.

11. Procédé selon la revendication 10, **caractérisé en ce qu'**on prédéfinit dans le modèle de processus au moins une force de laminage mesurée dans la cage de laminoir (2) ou dans une des cages de laminoir (2, 3, 6, 7).

12. Procédé selon la revendication 10, **caractérisé en ce qu'**on prédéfinit dans le modèle de processus au moins un courant de moteur mesuré d'un entraînement électrique d'un cylindre (4, 5).

13. Procédé selon la revendication 10, **caractérisé en ce qu'**on prédéfinit dans le modèle de processus au moins un couple de rotation de moteur mesuré d'un entraînement électrique d'un cylindre (4, 5).

14. Procédé selon la revendication 10, **caractérisé en ce qu'**on prédéfinit dans le modèle de processus au moins une température du produit à laminer (1), mesurée à un endroit.

15. Procédé selon l'une quelconque des revendications 1 à 14, **caractérisé en ce que** le laminage du produit à laminer (1) est un laminage à froid.

16. Procédé selon l'une quelconque des revendications 1 à 15, **caractérisé en ce qu'**on pulvérise le lubrifiant de refroidissement sur le produit à laminer (1) en formant un angle α par rapport à la direction de laminage W, de préférence en formant un angle α inférieur à 45° par rapport à l'horizontale.

17. Procédé selon l'une quelconque des revendications 1 à 16, **caractérisé en ce qu'**on utilise, à titre de lubrifiant de refroidissement, de l'huile ou une émulsion.
